# EUROPEAN PATENT SPECIFICATION

(11) **EP 1 397 396 B1**
(45) Date of publication and mention of the grant of the patent: **23.03.2005**
(21) Application number: 02750963.7
(22) Date of filing: 21.05.2002
(51) Int. Cl.: C08F 8/00, C08F 10/06, C08L 23/10

(54) **POLYPROPYLENE RESIN COMPOSITION**
POLYPROPYLENHARZZUSAMMENSETZUNG
COMPOSITION DE RESINE DE POLYPROPYLENE

(30) Priority: 30.05.2001 JP 2001163158; 09.10.2001 JP 2001311826
(43) Date of publication of application: 17.03.2004
(73) Proprietor: Basell Poliolefine Italia S.p.A., 20125 Milano (IT)
(72) Inventor: IWASHITA, Toshiyuki, Oita City Oita Prefecture 870-0147 (JP)
(74) Representative: Gaverini, Gaetano
(86) International application number: PCT/EP2002/005603
(87) International publication number: WO 2002/096960

(56) References cited:
- DE-A- 19 720 973
- DE-A- 19 724 414
- US-B1- 6 204 348

## Description

The present invention relates to a polypropylene resin composition having a high melt tension and excellent stiffness and moldability. Particularly, the present invention relates to the polypropylene resin composition that is high in melt tension, satisfactory in stiffness, allowed to decrease only slightly in melt tension after re-melting, and particularly excellent in recycling properties.

Polypropylene resins in general are inexpensive, and widely used as industrial materials such as automobile parts and electrical and electronic parts and as wrapping materials by making the best use of characteristics of the resins such as lightness in weight, chemical resistance, acid resistance, and heat resistance. In the field of wrapping, recycling properties in particular is coming to be demanded in order to cope with the environmental problem in recent years, and improvement in characteristics of polypropylene wrapping materials has been strongly expected in view of competitive costing as well.

However, the polypropylene resins in general have small melt tension and therefore a disadvantage of being inferior in processability for extrusion, foaming, blow molding, and the like. In order to solve this problem, for example, a method of reacting an organic peroxide and a crosslinking aid in a resin that is in a molten state (Japanese Patent Laid-Open No.93711/1984, Japanese Patent Laid-Open No.152754/1986, etc.), a method of reacting in an inactive atmosphere a low temperature-decomposable peroxide that is added beforehand (Japanese Patent Laid-Open No.298536/1990), and a method of exposing a resin to a thermal treatment by irradiation with electron rays in an inactive atmosphere (Japanese Patent Laid-Open No.121704/1987), and the like are proposed.

However, although all these conventional methods improve part of characteristics of the polypropylene resins, the melt tension of the resins is still insufficient, and the resins as before have the disadvantage of reducing the melt tension when re-melted for recycling. The conventional method of using an organic peroxide also encounters the problems of odor caused by use of the crosslinking aid, marked reduction in melt tension after re-melting, and discoloration that may be caused by the formulation of additives.

The present invention aims at solving the problems of the conventional art as described above and providing a polypropylene resin composition that has high melt tension and causes no discoloration and only low reduction in the melt tension when the resin is recycled.

In order to solve the aforesaid problems, the present invention provides the following polypropylene resin compositions.
(1) A polypropylene resin composition containing (A) a polypropylene resin treatment product obtained by adding from 0.05 to 5 weight parts of an organic peroxide to 100 weight parts of a polypropylene resin with a melt flow rate of from 0.1 to 50 g/10min and carrying out a melt treatment and (B) from 0.01 to 2 weight parts of an oxide of the group 2 or 12 metal of the periodic table or a metal alkoxide represented by the following general formula (I) per 100 weight parts of the resin content of the above polypropylene resin treatment product:

   M(R)ₘ₋ₙ(OR')ₙ (I)

   (In the above formula R and R' each represent an alkyl group with one to 20 carbon atoms, m is 3 or 4, n is an integer satisfying m ≥ n ≥ 2, and M represents B, Al, Si, or a metal atom of the group 4 or 5 of the periodic table).
(2) A polypropylene resin composition containing from 5 to 95 weight parts of the polypropylene resin composition of the aforesaid (1) and (C) from 95 to 5 weight parts of a polypropylene resin with a melt flow rate of from 0.01 to 100 g/10min.
(3) The polypropylene resin composition of the aforesaid (1) and (2) further containing (D) from 0.05 to 20 weight parts of a nucleating agent per 100 weight parts of the resin content.

Preferred embodiments of the present invention are illustrated in detail below.

The polypropylene resins used as component (A) in the present invention are homopolymers of propylene or copolymers of propylene and other α-olefins with a melt flow rate of from 0.1 to 50 g/10min. Herein, the other α-olefins include ethylene, 1-butene, 1-pentene, 1-hexene, 1-heptene, 1-octene, 1-decene, 4-methyl-1-pentene, and the like. The amount of the α-olefins in the copolymers of propylene and the other α-olefins is 10 weight percent at most.

When the amount of the other α-olefins in the copolymers of propylene and the other α-olefins is more than 10 weight percent, the treatment may unpreferably cause roughness in extrudate or reduction in stiffness although they depend upon the kind of organic peroxide.

These polymers can be used singly or two or more thereof can be jointly used. These polymers can be produced according to known procedures, for example, in the presence of a Ziegler-Natta catalyst or a metallocene catalyst.

The melt flow rate of the aforesaid polypropylene resins ranges from 0.1 to 50 g/10min, preferably from 0.2 to 45 g/10min, further preferably from 0.2 to 40 g/10min, and particularly preferably from 0.3 to 30 g/10min. Too small values of the melt flow rate may cause gelation depending upon the kind of organic peroxide. Too large values also result in small improvement of the melt tension in spite of a treatment with the organic peroxide, and are unpreferred because sufficient improvement cannot be expected.

Furthermore, the polypropylene resins used as component (A) may include polypropylene resins having undergone graft reaction with maleic anhydride, maleic acid, acrylic acid, methacrylic acid, methyl acrylate, ethyl acrylate, N,N-dimethylaminoethyl acrylate, and the like.

In the present invention, the melt flow rate is a value measured according to JIS K7210 at a temperature of 230°C and a load of 2.16 kg and hereinafter occasionally referred to as MFR.

In the present invention, the polypropylene resin treatment products of component (A) are formed by adding from 0.05 to 5 weight parts of organic peroxides to 100 weight parts of such polypropylene resins and carrying out a melt treatment (hereinafter occasionally referred to as an "organic peroxide treatment").

In the organic peroxide treatment, the treatment can be carried out by blending the aforesaid polypropylene resin and an organic peroxide together and then melt kneading or the treatment can be carried out by feeding an organic peroxide through a side feeder into an extruder while melt kneading the polypropylene resin.

The organic peroxides used in the present invention preferably include diacyl peroxides, peroxy esters, and peroxy carbonates.

Specific examples of the organic peroxides include lauroyl peroxide, isobutyl peroxide, 3,5,5-trimethylhexanol peroxide, octanol peroxide, stearoyl peroxide, succinperoxide, t-butylperoxy 2-ethylhexanol, t-butyl peroxyisobutylate, t-hexylperoxy 2-ethylhexanol, t-hexyl peroxypivalate, t-butylperoxyisopropyl monocarbonate, t-butylperoxy 2-ethylhexyl monocarbonate, di-n-propyl peroxydicarbonate, bis(4-t-butylcyclohexyl) peroxycarbonate, di-2-ethylhexyl peroxydicarbonate, dicetyl peroxydicarbonate, dimyristyl peroxydicarbonate, dibutyl peroxydicarbonate, and the like. Of these, dimyristyl peroxydicarbonate, bis(4-t-butylcyclohexyl) peroxydicarbonate and dicetyl peroxydicarbonate are preferred. These organic peroxides can be used singly or two or more thereof can be jointly used.

The amount of the organic peroxides blended is from 0.05 to 5 weight parts, preferably from 0.1 to 3 weight parts, and particularly preferably from 0.2 to 3 weight parts to 100 weight parts of the polypropylene resins. The amount less than 0.05 weight part is unable to much more expect improvement in melt tension, and exceeding 5 weight parts may cause gelation depending upon the kind of organic peroxide during the treatment, and simultaneously causes odor, and also is unpreferred in view of costs.

In the present invention, the presence of a carbonyl group or a carboxyl group in component (A) having undergone an organic peroxide treatment (the presence of peaks at 1780 to 1500 cm⁻¹ in an absorption spectra measured with an infrared spectrophotometer) is more effective when the following component (B) is blended.

The oxides of the group 2 or 12 metal of the periodic table used as component (B) in the present invention (hereinafter referred to as metal oxides) include zinc oxide, cadmium oxide, magnesium oxide, calcium oxide, barium oxide, and the like.

On the other hand, specific examples of the metal alkoxide represented by general formula (1) include aluminum isopropoxide, diethylaluminum diethoxide, titanium(iv) tetrabutoxide, titanium(iii) triethoxide, diethyltitanium(iv) diisopropoxide, boron tripropoxide, thexylborane dimethoxide, vanadium(iv) tetrabutoxide, zirconium(iv) tetraethoxide, and the like.

Furthermore, the aforesaid metal alkoxide can have a polymer structure such as dimer or trimer bonded by forming a three-center two-electron bond.

Commercial available products can be used as such as the metal oxides or metal alkoxides used in the present invention, and used when the purities thereof are 95 percent or more. The amount of the metal oxides or the metal alkoxides added is from 0.01 to 2 weight parts, preferably from 0.02 to 1.8 weight parts, and particularly preferably from 0.03 to 1.5 weight parts to 100 weight parts of the resin content of component (A) having undergone the organic peroxide treatment. The amount less than 0.01 weight part may be insufficient in improvement of melt tension in some cases after re-melting, and exceeding 2 weight parts unpreferably causes discoloration or odor.

The polypropylene resins used as component (C) in the present invention are homopolymers of propylene or copolymers of propylene and 10 weight percent or less of other α-olefins, for example, such as ethylene, 1-butene, 1-pentene, 1-hexene, 1-heptene, 1-octene, 1-decene, and 4-methyl-1-pentene. When the amount of the α-olefins copolymerized exceeds 10 weight percent, reduction in stiffness may be observed depending upon the composition ratio.

These polymers can be produced according to known procedures in the presence of the known Ziegler-Natta catalyst or metallocene catalyst as described above. These polymers can be used singly or two or more thereof can be jointly used.

The MFR of the polypropylene resins of component (C) is from 0.01 to 100 g/10min, preferably from 0.05 to 80 g/10min, and particularly preferably from 0.1 to 70 g/10min.

This component (C) is used for the purpose of reducing costs by mixing with the polypropylene resin compositions of the aforesaid (1) of the present invention (hereinafter occasionally referred to as blend treatment products when the compositions themselves' are not used as final products, but used as intermediate products) to reduce the amount of the blend treatment products, and component (C) itself undergoes no organic peroxide treatment.

Accordingly, the amount of component (C) blended is regulated principally in consideration of costs, and the polypropylene resins of component (C) are preferably blended at a ratio of from 95 to 5 weight parts to from 5 to 95 weight parts of the aforesaid blend treatment products, and particularly preferably at a ratio of from 90 to 30 weight parts to from 10 to 70 weight parts of the blend treatment products.

The ratio of the polypropylene resins of component (C) can be less than 5 weight parts, but the effect of reducing costs is small in this case, and merit is hardly produced. When component (C) exceeds 95 weight parts, no polypropylene resin with a high melt tension may be obtained in some times.

Nucleating agents (D) can be added to the resin compositions of the present invention as described above, agents which are usually used in the field of synthetic resin and have the effect of helping crystals to grow as nuclei of crystals when added to crystalline resins such as polypropylene. Such nucleating agents include metal salts of carboxylic acids, dibenzyl sorbitol derivatives, alkali metal salts of phosphoric acid, inorganic compounds such as talc, and the like.

Specific examples of the nucleating agents include sodium benzoate, aluminum adipate, aluminum p-t-butylbenzoate, 1,3,2,4-dibenzylidenesorbitol, 1,3,2,4-bis(p-methyl-benzylidene)sorbitol, 1,3,2,4-bis(p-ethylbenzylidene)-sorbitol, 1,3-p-chlorobenzylidene-2,4-p-methylbenzylidene-sorbitol, sodium bis(4-t-butylphenyl) phosphate, sodium bis(4-t-methylphenyl) phosphate, potassium bis(4,6-di-t-butylphenyl) phosphate, sodium 2,2'-methylene-bis(4,6-di-t-butylphenyl) phosphate, sodium 2,2'-ethylidene-bis(4,6-di-t-butylphenyl) phosphate, talc, calcium carbonate and the like.

The amount of the nucleating agent blended is from 0.05 to 20 weight parts to 100 weight parts of the resin content in the polypropylene resin composition in general, but there exist preferred ratios depending upon the kind of the nucleating agent. For example, in the case of organic nucleating agents, the amount thereof in general is from 0.05 to 1 weight part, preferably from 0.08 to 0.8 weight part, and particularly preferably from 0.1 to 0.5 weight part. On the other hand, in the case of the inorganic compounds such as talc, the amount thereof in general is from 1 to 18 weight parts and particularly preferably from 5 to 15 weight parts.

When the inorganic compounds are used, those treated with a coupling agent of titanate-series, silane-series, or aluminum-series and a surface treatment such as aliphatic acids, aliphatic metal salts, or aliphatic esters can be used.

In the first embodiment of the present invention, reduction in melt tension and rise in MFR in the re-melt kneading can be depressed, and melt tension can be effectively maintained by adding a metal oxide or a metal alkoxide of component (B) to a polypropylene resin treatment product of component (A) obtained by treating a polypropylene resin with an organic peroxide to obtain a composition.

The second embodiment of the present invention is a resin composition where the polypropylene resin composition obtained in the first embodiment as described above and a polypropylene resin of component (C) are blended together in the range as described above. According to this embodiment, the action effects similar to that of the aforesaid first embodiment are obtained, and simultaneously the amount of the organic peroxide can be reduced to realize reduction in costs and improvement in production efficiency.

In the third embodiment of the present invention, a nucleating agent of component (D) is mixed with the polypropylene resin compositions of the aforesaid first embodiments or second embodiments in the aforesaid range, thereby to improve the stiffness under the conditions where the reduction of melt tension is depressed. When component (D) is blended in the second embodiment, it is desirable to blend and mix both of the polypropylene resin of component (C) and the nucleating agent of component (D) simultaneously with the resin composition of the second embodiment.

Processes for producing the aforesaid polypropylene resin compositions of the first to third embodiments are illustrated below.

The polypropylene resin treatment product (A) obtained by adding from 0.05 to 5 weight parts of the organic peroxide to 100 weight parts of the polypropylene resin with a melt flow rate of from 0.1 to 50 g/10min and then carrying out the melt treatment is produced as follows. When the organic peroxide treatment is carried out, it is desirable to blend together component (A), the organic peroxide, additives, and the like by use of a Henschel mixer or a ribbon mixer and to carry out melt kneading in general at a temperature of from 150 to 280°C and preferably from 160 to 260°C according to the aforesaid procedure although these temperatures are dependent upon the half-life temperature of the organic peroxide. Furthermore, component (A) and additives as described later can be blended together in a Henschel mixer or a ribbon mixer, and the organic peroxide can be added through a side feeder during further melt kneading at a temperature of from 150 to 280°C and preferably from 160 to 260°C. Furthermore, in the organic peroxide treatment, the polypropylene resin and organic peroxide can be mixed in a solution by use of a reactor and treated with stirring at a temperature of 40 to 150°C for from two minutes to three hours under an inert gas.

When component (A) and component (B) are blended together, or when component (C) and/or component (D) are added to component (A) and component (B), it is desirable that the most of the above organic peroxide disappears in order to develop the effect of the organic peroxide in the present invention.

It is preferred to blend component (B) with the aforesaid component (A) having undergone the organic peroxide treatment and then melt knead or to add component (B) through a side feeder during treating with the organic peroxide.

Furthermore, component (B) can be added to component (A) having undergone the organic peroxide treatment, blended in a Henschel mixer, and then melt kneaded, and component (C) is added thereto, and blended and melt kneaded as described above, or component (B) and component (C) can be simultaneously added to component (A) having undergone the organic peroxide treatment, blended, and then melt kneaded as described above.

Furthermore, after component (B) is added to component (A) having undergone the organic peroxide treatment and melt kneaded, component (D) can be added and melt kneaded, or component (C) and component (D) are added to a product obtained by adding component (B) to component (A) having undergone the organic peroxide treatment and then melt kneading, and then melt kneaded, or the respective components can be fed into component (A) having undergone the organic peroxide treatment through the side feeder of an extruder.

In order to produce pellets from the polypropylene resin composition obtained by blending together component (A) and component (B) or from the polypropylene resin composition obtained by adding component (C) and/or component (D) to component (A) and component (B), known procedures of pelletizing can be used. For example, an extrudate-cutting method can be preferably used wherein extrudates are extruded from an extruder and cut into a constant length after cooling in cold water.

In the aforesaid processes for the production, the pelletizing can be carried out as needed in the course of the production. Procedures known to the trade can be applied also to this pelletizing.

Desired additives can be further added to the resin compositions of the present invention as needed. In this case, although the formulation of additives is not particularly limited, a combination of a phenolic antioxidant, a phosphite additive, and calcium stearate is desirable for the formulation of additives. Tetrakis[methylene-3-(3',5'-di-t-4-hydroxyphenyl)propionate]methane and n-octadecinyl-3-(4'-hydroxynyl)propionate are particularly preferred as the phenolic antioxidant. The amount of the phenolic antioxidants added preferably ranges from 0.001 to 2 weight parts, more preferably from 0.002 to 1.8 weight parts, and most preferably from 0.005 to 1.5 weight parts per 100 weight parts of the resin compositions.

The amount more than 2 weight parts of the phenolic antioxidants may lead to large increase in MFR and decrease in the melt tension caused by the organic antioxidant treatment, and the amount less than 0.001 weight part produces deterioration according to the amount in the organic peroxide treatment to mar processability in some cases.

Tris(2,4-di-t-butylphenyl) phosphite is preferred as the phosphite additive. The amount of the additive ranges from 0.001 to 1.5 weight parts, more preferably from 0.005 to 1.5 weight parts, and most preferably from 0.01 to 1.0 weight parts per 100 weight parts of the resin compositions.

Although the amount less than 0.001 weight part does not particularly produce a problem, deterioration may occur in processing of the polypropylene resin compositions in some cases. Exceeding 1.5 weight parts may cause rise in MFR in recycling and in the organic peroxide treatment.

The amount of calcium stearate added ranges from 0.01 to 2 weight parts, preferably from 0.02 to 1.5 weight parts , and more preferably from 0.03 to 1.5 weight parts per 100 weight parts of the' resin compositions. The amount more than 2 weight parts of calcium stearate may cause rise in MFR and reduction in the melt tension in the organic peroxide treatment, and the amount less than 0.01 weight part may cause deterioration in the organic peroxide treatment.

A variety of conventional additives such as antioxidants, weathering stabilizers, antistatic agents, lubricants, anti-fog additives, modifying agents of electrical characteristics, processing stabilizers, pigments, and softeners can be added to the polypropylene resin compositions of the present invention as needed as long as the object of the present invention is not marred.

The melt tension of the polypropylene resin compositions thus obtained as final products is preferably 3 g or more and particularly preferably 4 g or more. The MFR is preferably from 0.1 to 20 g/10min and more preferably from 0.15 to 15 g/10min. The melt tension of 3 g or more of the polypropylene resin compositions can easily impart satisfactory processability. Furthermore, the MFR more than 0.1 g/10min can impart sufficient processability with ease, and exceeding 20 g/10min may cause the melt tension to fall below 3 g, which unpreferably leads to bad processability and particularly causes drawdown in vacuum forming.

### Examples

The present invention is illustrated in further detail through specific examples below.

In the examples, the physical properties were measured according to the following procedures, respectively.

### 1. Measurement of MFR

Measured according to JIS K7210, under condition M, appendix A, Table 1.

### 2. Content of Comonomer

Found with a nuclear magnetic resonance spectrometer (¹³C-NMR) and an infrared spectrophotometer.

### 3. Melt Tension

The melt tension is represented by the load (g); that weighs when an extrudate extruded into the air of 23°C at a speed of 15 mm/min through a nozzle (bore: 2.095 mm, L/D = 3.8) at a temperature of 230°C by use of a melt tension tester Model 2 manufactured by Toyoseiki Seisakusho K.K. is taken off at a take-off speed of 2.5 m/min.

### 4. Flexural Modulus (Stiffness)

Measured according to ASTM D790.

### 5. Appearance of Polypropylene Resin Compositions

Extrudates are inspected on pelletizing with the naked eye, and graded in the following three steps.
○: Non-rough and smooth extrudate
Δ: Rough extrudate
×: Extrudate is rough and fails to keep its original form.

### 6. Damping Factor of Melt Tension

When the polypropylene resin composition undergoes pelletizing at a temperature of 210°C by use of a 40-mmφ extruder manufactured by Yoshii Tekko K.K., the melt tension is taken as MT₁ (one pass), and when re-melting (pelletizing) of this pelletized product is repeated twice, the melt tension is taken as MT₃ (three passes). Then, the damping factor is defined as [(MT₁ - MT₃)/MT₁] × 100 (%).

Materials used in the following examples and comparative examples are as follows.

The followings were used as the polypropylene resins for component (A).

A homopolypropylene having an MFR of 3.2 g/10min (hereinafter referred to as "PP-A").

A homopolypropylene having an MFR of 4.5 g/10min (hereinafter referred to as "PP-B").

A random copolymer having an ethylene content of 2.1 weight percent and an MFR of 4.2 g/10min (hereinafter referred to as "PP-C").

A homopolypropylene having an MFR of 0.03 g/10min (hereinafter referred to as "PP-D").

A homopolypropylene having an MFR of 85 g/10min (hereinafter referred to as "PP-E").

Additives used were tetrakis[methylene-3-(3',5'-di-t-hydroxyphenyl) propionate] methane, tris(2,4-di-t-butylphenyl) phosphite, and calcium stearate.

The organic peroxides used were dimyristyl peroxydicarbonate (hereinafter referred to as "PO-1"), bis(4-t-butylcyclohexyl) peroxydicarbonate (hereinafter referred to as "PO-2"), and dicetyl peroxydicarbonate (hereinafter referred to as "PO-3").

The metal oxide and the metal alkoxide of component (B) used were magnesium oxide (manufactured by Wakojun-yaku Kogyo K.K., purity: 99.8 weight percent, hereinafter referred to as "B-1") and aluminum isopropoxide (manufactured by Wakojun-yaku Kogyo K.K., purity: 98.2 weight percent, hereinafter referred to as "B-2"), respectively.

The polypropylene resins of component (C) used were the aforesaid PP-1, PP-2, and PP-3.

Component D used was sodium 2,2-methylene-bis(4,6-di-t-butylphenyl) phosphate (trade name: NA11, manufactured by Asahi Denka K.K.).

### Examples 1 to 4 (the First Embodiment of the Present invention) and Comparative Examples 1 to 3

Component (A), the polypropylene resins, and the organic peroxides shown in the following Table 1, to which 0.05 PHR of tetrakis[methylene-3-(3',5'-di-t-hydroxyphenyl)-propionate]methane, 0.03 PHR of tris(2,4-di-t-butylphenyl) phosphite, and 0.08 PHR of calcium stearate were added underwent pelletizing at a temperature of 190°C by use of a 40-mmφ extruder manufactured by Yoshii Tekko K.K. to obtain polypropylene resin treatment products.

Component (B) was added to the respective organic peroxide-treated products (not added in Comparative Example 3), and furthermore the respective pellets were re-melt kneaded and pelletized at a temperature of 210°C by use of a 40-mmφ extruder manufactured by Yoshii Tekko K.K. to obtain polypropylene resin compositions. The melt tensions MT₁ (one pass) of the resulting pellets were measured. Furthermore, the re-melt kneading of the respective pellets was carried out, and pelletizing thereof was repeated twice to find the damping factors of the melt tension. Herein, the composition of Comparative Example 1 was a low MFR and furthermore gelled, and therefore, the melt tension was unable to be measured.

The resulting resin compositions of Examples 1 to 4 were taken as XPP-1 to XPP-4, and the those of Comparative Examples 1 to 3 were taken as XPP-5 to XPP-7.

Results are shown in the following Table 1.

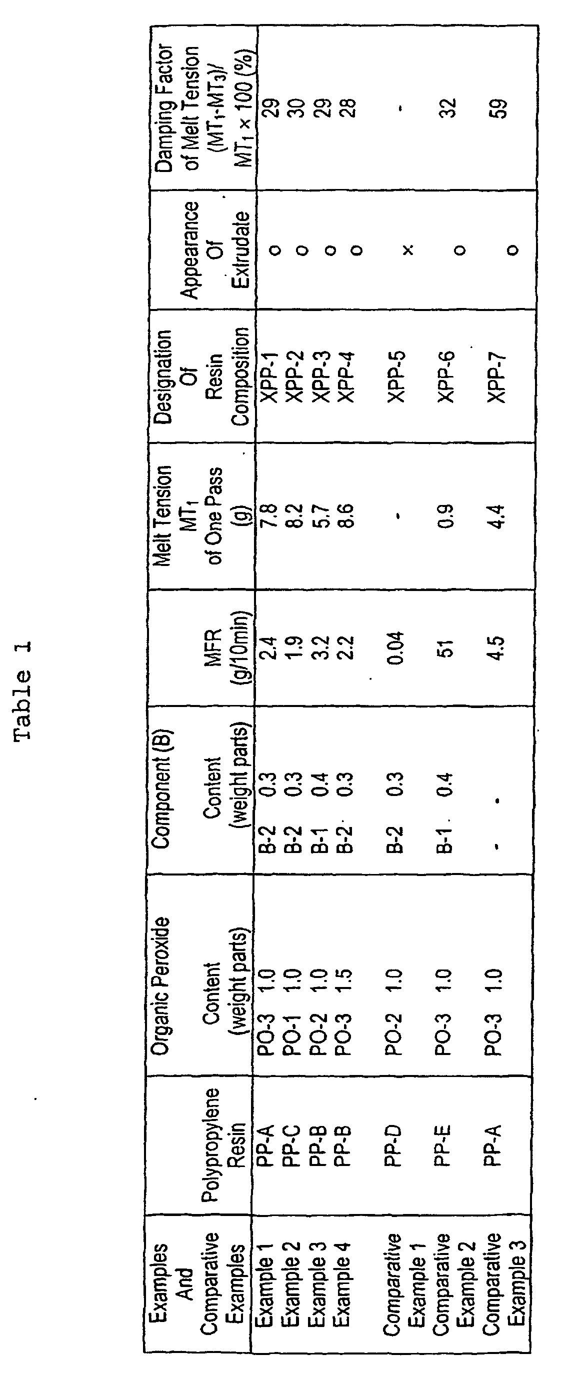

Results as shown in Table 1 reveal that the compositions of Examples 1 to 4 show high melt tensions, good appearances of the extrudates, and small damping factors of the melt tension when recycled. Furthermore, no discoloration was observed. The composition of Comparative Example 1 had a low MFR and caused gelation as well, and the extrudate thereof had a bad appearance. Moreover, the measurement of the melt tension was impossible. In Comparative Example 2, the composition had a low melt tension. The composition of Comparative Example 3 containing no component (B) had a large damping factor.

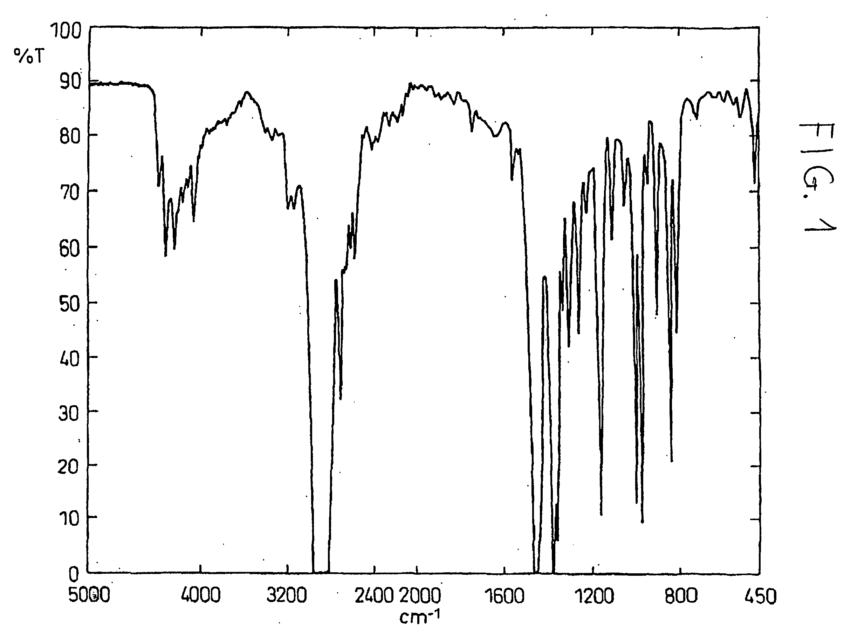

A spectrum of the polypropylene resin composition obtained in Example 4 measured with an infrared spectrophotometer is shown in Fig. 1.

### Examples 5 to 8 (The Second Embodiment of the Present Invention) and Comparative Examples 4 to 6

Component (C) was added to the samples of XPP-1 obtained in Example 1, XPP-2 obtained in Example 2, XPP-4 obtained in Example 4, XPP-5 obtained in Comparative Example 1, and XPP-7 obtained in Comparative Example 3 in ratios as shown in the following Table 2, and kneaded and pelletized by use of a 40-mmφ extruder manufactured by Yoshii Tekko K.K. at a temperature of 210°C to obtain polypropylene resin compositions. About the resulting pellets, the MFR and the melt tension [taken as MT₁ (one pass)] were measured. Furthermore, pelletizing was repeated two more times and the melt tensions MT₃ (three passes) were measured to find the damping factors. The appearances of extrudates were checked on measuring the melt tensions MT₃ (three passes).

The resulting resin compositions of Examples 5 to 7 are taken as XPP-8 to XPP-11, and those of Comparative Examples 4 to 6 are taken as XPP-12 to XPP-14.

Results are shown in the following Table 2.

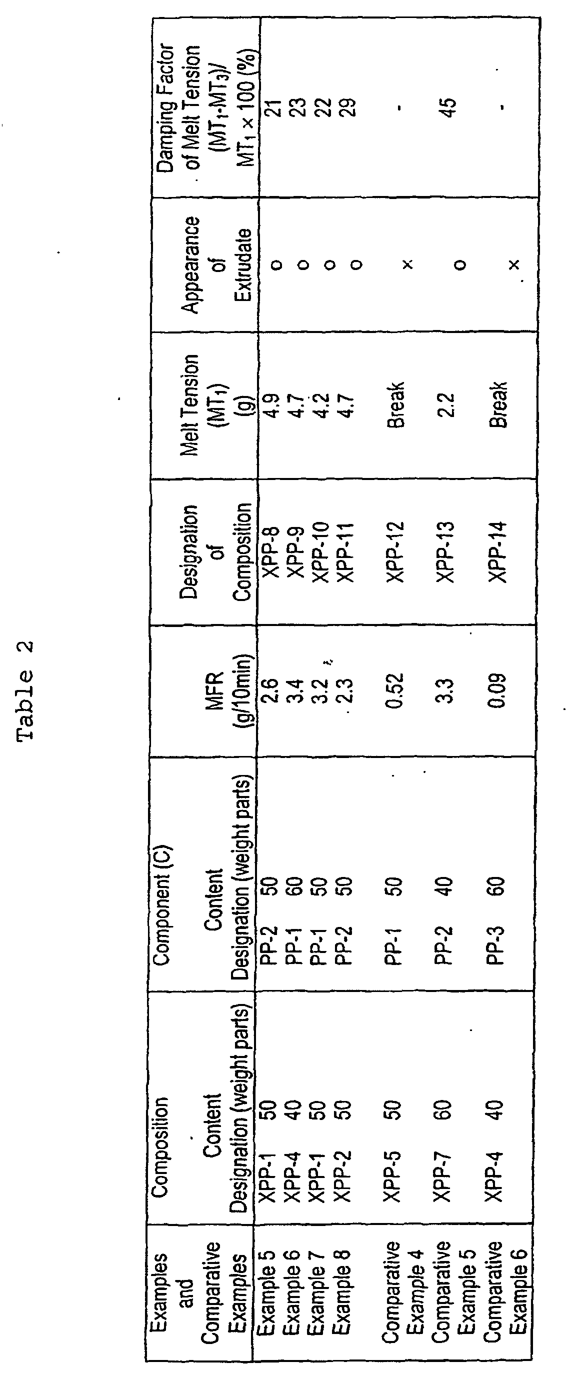

The results of Table 2 reveal that the compositions of Examples 5 to 7 show high melt tensions, and the extrudates thereof have good appearance, no discoloration, and small damping factors of the melt tension when recycled.

In Comparative Example 4, mixing was insufficient, gelation was partly observed as well, in addition pelletizing was carried out with difficulty so that extrudates were broken when the melt tension was measured. In Comparative Example 5, the melt tension was low, and the damping factor of the melt tension also was large. Similarly to Comparative Example 4, also in Comparative Example 6, mixing was insufficient, pelletizing was carried out with difficulty, and the appearance of the extrudate also was bad.

### Examples 9 and 10 (The Third Embodiment of the Present Invention)

0.4 Weight part of NA11 as component (D) was added to XPP-1 obtained in Example 1 and XPP-9 obtained in Example 6 and pelletized similarly to Example 5 to obtain the polypropylene resin compositions of the present invention. Test specimens were obtained from these pellets, and the flexural moduli thereof were measured. Furthermore, the melt tensions and the damping factors thereof were checked similarly to Example 5.

Results are shown in the following Table 3.

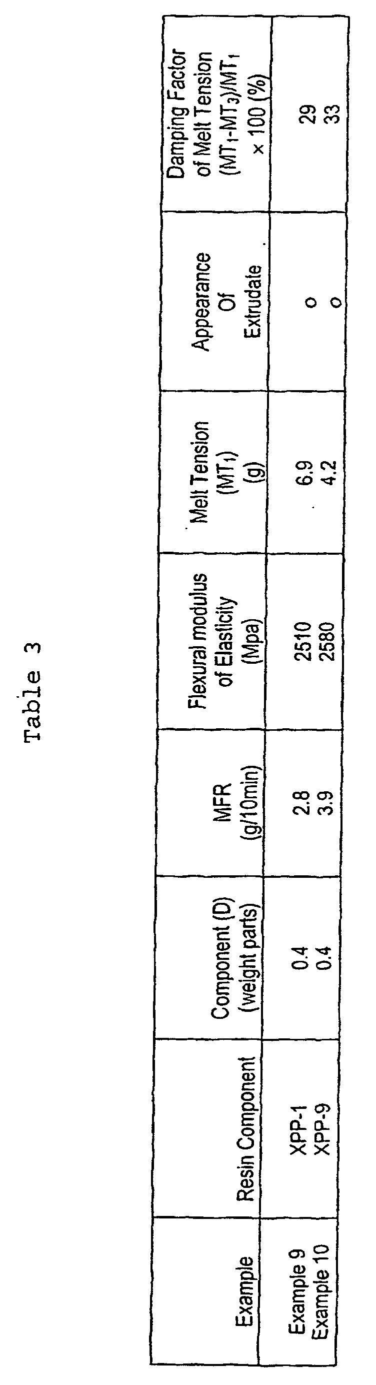

Both compositions of Examples 9 and 10 have high melt tensions, and the extrudates thereof have good appearance and high flexural moduli.

As illustrated above, the present invention provides the polypropylene resin compositions having high melt tensions and. excellent processsability, simultaneously excellent recycling properties, and no discoloration and odor. Furthermore, the polypropylene resin compositions are obtained wherein the MFR is controlled when re-melt kneaded, reduction in the melt tension is prevented, the recycling properties are excellent, and moreover reduction in costs and improvement in production efficiency can be achieved.

### Brief Description of the Drawing

Figure 1 shows an infrared absorption spectrum of the polypropylene resin composition obtained in Example 4.

## Claims

1. A polypropylene resin composition containing (A) a polypropylene resin treatment product obtained by adding from 0.05 to 5 weight parts of an organic peroxide to 100 weight parts of a polypropylene resin with a melt flow rate of from 0.1 to 50 g/10min and carrying out a melt treatment and (B) from 0.01 to 2 weight parts of an oxide of the group 2 or 12 metal of the periodic table or a metal alkoxide represented by the following general formula (I) to 100 weight parts of a resin content of the above polypropylene resin treatment product:
M(R)ₘ₋ₙ(OR')ₙ (I)
wherein R and R' each represent an alkyl group with from 1 to 20 carbon atoms, m is 3 or 4, n is an integer satisfying m ≥ n ≥ 2, and M represents boron (B), aluminum (Al), silicon (Si), or a metal atom of the group 4 or 5 of the periodic table.

2. The polypropylene resin composition of claim 1 containing from 5 to 95 weight parts of the polypropylene resin composition comprising (A) and (B) as described in claim 1, and (C) from 95 to 5 weight parts of a polypropylene resin with a melt flow rate of from 0.01 to 100 g/10min.

3. The polypropylene resin composition of claim 1 or 2 further containing (D) from 0.05 to 20 weight parts of a nucleating agent per 100 weight parts of the resin content.

## Patentansprüche

1. Polypropylenharzzusammensetzung, enthaltend (A) ein durch Zugabe von 0,05 bis 5 Gewichtsteilen eines organischen Peroxids zu 100 Gewichtsteilen eines Polypropylenharzes mit einer Schmelzflußrate von 0,1 bis 50 g/10 min und Durchführung einer Schmelzbehandlung erhaltenes Polypropylenharzbehandlungsprodukt und (B) 0,01 bis 2 Gewichtsteile eines Oxids eines Metalls aus der Gruppe 2 oder 12 des Periodensystems oder eines Metallalkoxids der folgenden allgemeinen Formel (I) auf 100 Gewichtsteile Harzgehalt des obigen Polypropylenharzbehandlungsprodukts:
M(R)ₘ₋ₙ(OR')ₙ (I)
worin R und R' jeweils für eine Alkylgruppe mit 1 bis 20 Kohlenstoffatomen stehen, m für 3 oder 4 steht, n für eine ganze Zahl steht, die der Bedingung m ≥ n ≥ 2 genügt, und M für Bor (B), Aluminium (Al), Silicium (Si) oder ein Metallatom aus der Gruppe 4 oder 5 des Periodensystems steht.

2. Polypropylenharzzusammensetzung nach Anspruch 1, enthaltend 5 bis 95 Gewichtsteile der in Anspruch 1 beschriebenen (A) und (B) enthaltenden Polypropylenharzzusammensetzung und (C) 95 bis 5 Gewichtsteile eines Polypropylenharzes mit einer Schmelzflußrate von 0,01 bis 100 g/10 min.

3. Polypropylenharzzusammensetzung nach Anspruch 1 oder 2, ferner enthaltend (D) 0,05 bis 20 Gewichtsteile eines Nukleierungsmittels auf 100 Gewichtsteile des Harzgehalts.

## Revendications

1. Une composition de résine polypropylénique contenant:
(A) Un produit de traitement à l'état fondu d'une résine polypropylénique obtenue par addition de 0,05 à 5 parties en poids d'un péroxyde organique à 100 parties en poids d'une résine polypropylénique présentant une vitesse d'écoulement à l'état fondu de 0,1 à 50 g/10 min:
(B) de 0,01 à 2 parties en poids d'un oxyde du groupe 2 ou 12 des métaux du tableau périodique des éléments ou d'un alkoxide métallique représenté par la formule générale (I) pour 100 parties en poids de la teneur en résine du produit du traitement de la résine polypropylénique précitée:
M(R)ₘ₋ₙ(OR')ₙ (I)
dans laquelle:
- R et R' représentent, indépendamment l'un de l'autre, un radical alkyle comprenant de 1 à 20 atomes de carbone,
- m est égal à 3 ou 4,
- n est un nombre entier satisfaisant la relation m ≥ n ≥ 2 et,
- M représente du bore (B), de l'aluminium (Al), de la silice (Si), ou un atome d'un métal du groupe 4 ou 5 du tableau périodique des éléments.

2. La composition de résine polypropylénique selon la revendication 1 contenant de 5 à 95 parties en poids de la composition de résine polypropylénique comprenant (A) et (B) telle que décrite dans la revendication 1 et (C): de 95 à 5 % parties en poids d'une résine polypropylénique présentant une vitesse d'écoulement à l'état fondu compris entre 0,01 à 10 g/10 min.

3. La composition de résine polypropylénique selon la revendication 1 ou la revendication 2 contenant en outre (D): de 0,05 à 20 parties en poids d'un agent de nucléation par 100 parties en poids de la teneur en résine.
